# EUROPEAN PATENT APPLICATION

(11) **EP 4 826 294 A1**
(43) Date of publication of application: **21.10.2026**
(21) Application number: 24904328.2
(22) Date of filing: 16.12.2024
(51) Int. Cl.: F23J 15/00, B01D 53/78, B01D 53/86

(54) **NITROGEN OXIDE REDUCTION SYSTEM**

(30) Priority: 14.12.2023 KR 20230181647
(71) Applicant: POSCO Holdings Inc., Pohang-si, Gyeongsangbuk-do 37859 (KR)
(72) Inventor: KIM, Beom-Sik, Pohang-si, Gyeongsangbuk-do 37877 (KR); RHEE, Chang-Houn, Pohang-si, Gyeongsangbuk-do 37877 (KR); PARK, Hai-Woong, Pohang-si, Gyeongsangbuk-do 37877 (KR); JOO, Sang-Wook, Pohang-si, Gyeongsangbuk-do 37877 (KR); KWON, Gi-Hun, Pohang-si, Gyeongsangbuk-do 37877 (KR)
(74) Representative: Pfenning, Meinig & Partner mbB
(86) International application number: PCT/KR2024/020439
(87) International publication number: WO 2025/127763

(57) **Abstract**

The nitrogen oxide reduction system according to exemplary embodiments of the present invention provides a system in which a selective catalytic reduction (SCR) method and a selective non-catalytic reduction (SNCR) method are linked. Accordingly, nitrogen oxides and nitrous oxides included in exhaust gas generated by ammonia combustion can be effectively removed. In particular, the removal efficiency of nitrogen oxides and nitrous oxides can be further improved by optimizing the contents of nitrogen oxides and a reducing agent.

## Description

### Technical Field

The present disclosure relates to a nitrogen oxide reduction system.

More specifically, the present disclosure relates to a nitrogen oxide reduction system that can reduce nitrogen oxides generated during ammonia combustion.

### Background Art

Ammonia is being considered as a carbon-free fuel to reduce carbon dioxide (CO₂) emissions, and accordingly, combustion technologies using ammonia as a raw material are being developed. However, due to nitrogen (N) atoms included within ammonia molecules, nitrogen oxides (NOx) or nitrous oxides (N2O) may be generated during the combustion process at higher concentrations than that of conventional fossil fuel combustion.

Among nitrogen oxides, NO and NO2 are representative air pollutants causing photochemical smog and acid rain, and have recently been drawing attention as precursors to fine dust. In addition, although N2O is harmless to the human body, a global warming potential (GWP) of one molecule of N2O gas is 310 times that of one molecule of carbon dioxide (CO2) gas. Therefore, technology for reduction thereof should be applied.

(Patent Document 1) Korean Published Patent Application No. 10-2022-004846.

### Summary of Invention

### Technical Problem

An object of the present disclosure is to provide a nitrogen oxide reduction system that can effectively remove nitrogen oxides and nitrous oxides that may be generated during ammonia combustion.

An object of the present disclosure is not limited to the above description. The object of the present disclosure will be understood from the entire content of the present specification, and a person skilled in the art to which the present disclosure pertains will understand an additional object of the present disclosure without difficulty.

### Solution to Problem

According to exemplary embodiments of the present disclosure, provided is a nitrogen oxide reduction system, the nitrogen oxide reduction system including: a combustion facility configured to combust a first fluid including ammonia, and to discharge a first exhaust gas including nitrogen oxides, a first reduction device configured to inject a second fluid including ammonia into the first exhaust gas, and to provide a second exhaust gas having a lower nitrogen oxide content than that of the first exhaust gas, and a second reduction device configured to accommodate the second exhaust gas, and to remove nitrogen oxides of the second exhaust gas by reacting a third fluid including ammonia with the second exhaust gas on a catalyst for removing nitrogen oxides, wherein a nitrogen oxide content(N1) of the first exhaust gas, an amount of ammonia supplied (Q1) to the first reduction device, and an amount of ammonia supplied (Q2) to the second reduction device satisfy the following Relational Expression 1. [Relation Expression 1] $0.95 \leq \left(Q1+Q2\right) / N 1 \leq 1$

A nitrogen oxide content (N2) of the second exhaust gas and an amount of ammonia supplied (Q2) to the second reduction device may satisfy the following Relational Expression 2. [Relation Expression 2] $0.95 \leq Q 2 / N 2 \leq 1$

The first reduction device may be configured to perform a selective non-catalytic reduction reaction (SNCR) using the second fluid as a reducing agent.

A temperature of first exhaust gas in contact with the injected second fluid may be 900 to 1,000°C.

The first reduction device may include a pipe extending into the combustion facility and a nozzle configured to inject the second fluid from the pipe.

The second reduction device may be configured to perform a selective catalytic reduction (SCR) reaction using the third fluid as a reducing agent.

The second reduction device may be configured so that, based on the flow of the second exhaust gas, the third fluid is supplied upstream of the second reduction device, and the catalyst for removing nitrogen oxides may be located downstream of the second reduction device.

The nitrogen oxide reduction system may further include a catalyst for decomposing nitrous oxides disposed downstream of the first reduction device, and catalyzing a reduction reaction of nitrous oxides included in the second exhaust gas.

The catalyst for decomposing nitrous oxides may be accommodated inside the second reduction device, and the third fluid may be supplied to the interior of the second reduction device between the catalyst for decomposing nitrous oxides and the catalyst for removing nitrogen oxides.

The nitrogen oxide reduction system may further include a third reduction device, based on the flow of the second exhaust gas, disposed between the first reduction device and the second reduction device, and configured to accommodate the second exhaust gas, and to process the nitrous oxides included in the second exhaust gas on a catalyst for decomposing nitrous oxides.

An internal temperature of the third reduction device may be 350 to 600°C.

The catalyst for decomposing nitrous oxides may include one or more of precious metals, transition metals, and alloys thereof.

The catalyst for decomposing nitrous oxides may be in a form supported on a support including zeolite.

An internal temperature of the second reduction device may be 200 to 400°C.

The catalyst for removing nitrogen oxides may include one or more of vanadium (V), tungsten (W), molybdenum (Mo), and combinations thereof.

The catalyst for removing nitrogen oxides may be in the form in which active metal particles are supported on a support including titanium (Ti).

### Advantageous Effects of Invention

As set forth above, according to exemplary embodiments of the present disclosure, a nitrogen oxide reduction system provides a system in which a selective catalytic reduction (SCR) method and a selective non-catalytic reduction (SNCR) method are linked. Accordingly, nitrogen oxides and nitrous oxides included in exhaust gas generated by ammonia combustion may be effectively removed. In particular, the removal efficiency of nitrogen oxides and nitrous oxides can be further improved by optimizing the contents of nitrogen oxides and a reducing agent.

The various and beneficial advantages and effects of the present disclosure are not limited to the above-described contents, and may be more easily understood through descriptions of specific embodiments of the present disclosure.

### Brief description of drawings

FIG. 1 is a process flow diagram illustrating a nitrogen oxide reduction system according to exemplary embodiments.
FIG. 2 is a process flow diagram illustrating a nitrogen oxide reduction system according to other exemplary embodiments.
FIG. 3 is a process diagram illustrating a nitrogen oxide reduction system according to other exemplary embodiments.
FIG. 4 is a graph illustrating a conversion rate of nitrogen oxides and an amount of ammonia slip according to a supplied amount of ammonia.

### Best Mode for Invention

Hereinafter, preferred embodiments of the present disclosure will be described in detail with reference to the attached drawings. Prior to the detailed description of the present disclosure, the terms or words used in this specification and claims described below should not be construed as being limited to a common or dictionary meanings, and the inventors should conceptualize their own invention in the best manner possible. It should be interpreted as having a meaning and concept corresponding to the technical idea of the present disclosure, based on the principle that it may be properly defined as a concept of a term for explanation.

Hereinafter, when describing with reference to the drawings, identical or corresponding components will be assigned the same reference numerals and duplicate descriptions thereof will be omitted.

In the following examples, terms such as first, second, and the like are used not in a limited sense but for the purpose of distinguishing one component from another component.

In the following examples, singular terms include plural terms unless the context clearly dictates otherwise.

In the following embodiments, terms such as include or have mean that the features or components described in the specification exist, and do not exclude in advance the possibility of adding one or more other features or components.

In the drawings, for convenience of explanation, the sizes of components may be exaggerated or reduced. For example, the size and thickness of each component shown in the drawings are shown arbitrarily for convenience of explanation, so the present invention is not necessarily limited to that which is shown.

In a case in which an embodiment can be implemented differently, a specific process sequence may be performed differently from the described sequence. For example, two processes described in succession may be performed at substantially the same time, or may be performed in an order opposite to the order described.

In addition, in describing the present invention, when it is determined that a detailed description of related known components or functions may obscure the essence of the invention, such detailed description thereof is omitted.

Hereinafter, a nitrogen oxide reduction system according to exemplary embodiments of the present disclosure will be described in detail. The configuration of the nitrogen oxide reduction system according to each embodiment described below is intended to explain one of the exemplary embodiments, and the configuration of the nitrogen oxide reduction system described below may be combined in various manners by a person skilled in the art.

### (Example 1)

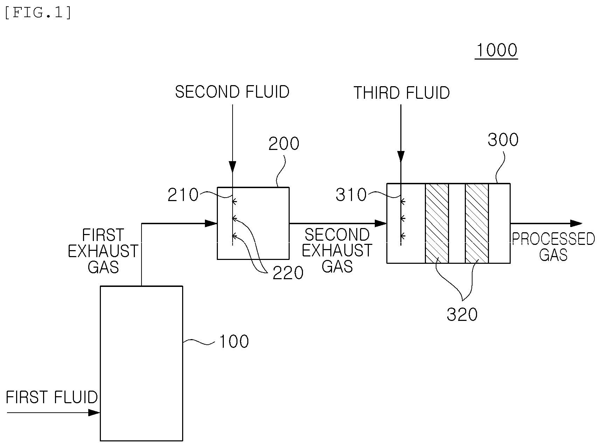

FIG. 1 is a process diagram for illustrating a nitrogen oxide reduction system 1000 according to exemplary embodiments.

Referring to FIG. 1, the nitrogen oxide reduction system 1000 includes a combustion facility 100, a first reduction device 200, and a second reduction device 300.

The combustion facility 100 may be configured to combust a first fluid including ammonia, and discharge a first exhaust gas. As the first fluid is combusted, the first exhaust gas may include nitrogen oxides.

A first fluid and fossil fuel may be supplied to the combustion facility 100. As a non-limiting example, only the first fluid may be supplied to the combustion facility 100. The combustion facility 100 is not particularly limited as long as it is a facility that can obtain thermal energy or electrical energy by combusting a specified fuel. As an example, the combustion facility 100 may be one or more of a coal boiler, a gas turbine, an industrial furnace, and a combination thereof.

The combustion facility 100 may include an exhaust duct located at an uppermost end thereof to discharge a first exhaust gas including nitrogen oxides. In the present disclosure, a nitrogen oxide refers to an oxide that can be generated by combusting a raw material including nitrogen (N), and may be one or more of NO, NO2, and N2O.

The exhaust duct may guide a flow of the first exhaust gas so that the first exhaust gas may flow to an upper end of the combustion facility 100 by forming negative pressure at the upper end of the combustion facility 100.

The combustion facility 100 may include a sensor configured to sense the content of nitrogen oxides included in the first exhaust gas. As an example, the sensor may be a NOx sensor. As another example, the sensor may be a nitrous oxide sensor. As another example, the sensor may be a NOx sensor and a nitrous oxide sensor.

The first reduction device 200 may be configured to inject a second fluid including ammonia into the first exhaust gas, and to provide a second exhaust gas having a lower nitrogen oxide content than the first exhaust gas. As a result, a flow of the second exhaust gas may be formed downstream of the first reduction device 200.

The first reduction device 200 may include an opening/closing valve (not shown) configured to control a supplied amount of the second fluid. By controlling a degree of opening of the opening/closing valve, the supply of the second fluid may be cut off or the amount of the second fluid injected may be controlled.

As a non-limiting example, the second fluid may include, by area %, 0.2 to 3.0% of ammonia, based on a total volume of the second fluid. More specifically, the second fluid may include, by area %, 0.3 to 2.5% of ammonia.

The second fluid may include, by area %, 0.5 to 2.0% of ammonia. The ammonia content of the second fluid can be controlled by diluting the second fluid using air or water. The second fluid may be any one of ammonia gas, urea solution, ammonia solution, and combinations thereof. As a non-limiting example, the second fluid may be provided to the first reduction device 200 by vaporizing one or more of urea solution and ammonia solution.

According to exemplary embodiments, the first reduction device 200 may be configured to perform a Selective Non-Catalytic Reduction (SNCR) using the second fluid as a reducing agent. As a result, the content of nitrogen oxides included in the first exhaust gas may be reduced by reducing the nitrogen oxides included in the first exhaust gas.

The reduction treatment of nitrogen oxides may follow the following Reaction Formulas.

[Reaction Formula 1] 4NH3 + 4NO + O₂ → 4N₂ + 6H₂O

[Reaction Formula 2] 8NH3 + 6NO₂ + O₂ → 7N₂ + 12H₂O

[Reaction Formula 3] 2NH3 + 3N₂O → 4N₂ + 3H₂O

[Reaction Formula 4] 2N₂O → 2N₂ + O₂

According to exemplary embodiments, a temperature of a first exhaust gas, in contact with the injected second fluid may be 900 to 1,000°C.

A SNCR reaction is a reaction reducing a target substance using a reducing agent without the intervention of a catalyst. In this case, the SNCR reaction of nitrogen oxides requires relatively high thermal energy. Therefore, it is advantageous for the temperature of the first exhaust gas in contact with the second fluid to be higher.

According to exemplary embodiments, a first reduction device 200 may be located adjacent to a combustion facility 100. Due to the combustion reaction within the combustion facility 100, the first exhaust gas may contain high thermal energy. Therefore, the efficiency of a nitrogen oxide reduction system 1000 be improved by utilizing sensible heat of the first exhaust gas for the reduction reaction of nitrogen oxides.

According to other exemplary embodiments, a first reduction device 200 may be installed inside a combustion facility 100. More specifically, the first reduction device 200 may be installed inside the combustion facility 100, and may be installed to inject a second fluid in a countercurrent flow with respect to the first exhaust gas. Alternatively, the first reduction device 200 may be installed to inject a second fluid in parallel with the first exhaust gas. As a result, there is no need to provide a separate device or reactor to accommodate the first exhaust gas from the combustion facility 100, thereby reducing an usable area of the nitrogen oxide reduction system 1000. In addition, the number of management items for the nitrogen oxide reduction system 1000 is reduced, making maintenance of the nitrogen oxide reduction system 1000 easier.

More specifically, the first reduction device 200 may include a pipe 210 extending into the interior of the combustion facility 100, and a nozzle 220 configured to inject a second fluid from the pipe. As a result, the second fluid may be directly injected into the first exhaust gas flowing inside the combustion facility 100. In this case, the sensible heat of the first exhaust gas may be used directly as thermal energy required for the reduction reaction of nitrogen oxides. As a result, the second fluid and the first flue gas react to reduce the nitrogen oxides contained in the first exhaust gas, and a second exhaust gas having a lower nitrogen oxide content may be provided.

The pipe 210 and nozzle 220 of the first reduction device 200 are not particularly limited as long as they can be used in a high-temperature environment.

The first reduction device 200 may include an opening/closing valve (not shown) configured to control an amount of the second fluid injected. By controlling a degree of opening of the opening/closing valve, the supply of the second fluid may be cut off, or the amount of the second fluid injected may be controlled.

The first reduction device 200 may include a sensor configured to measure an ammonia content included in the second fluid. The nitrogen oxide reduction system 1000 may accommodate the measured ammonia content data and control the amount of the second fluid injected.

The first reduction device 200 may include a sensor configured to measure the content of nitrogen oxides included in the second exhaust gas. The sensor included in the first reduction device 200 may be of a different type or the same type as the sensor included in the combustion facility 100. As one example, the sensor may be a NOx sensor. As another example, the sensor may be a nitrous oxide sensor. As another example, the sensor may be both a NOx sensor and a nitrous oxide sensor.

The content of nitrogen oxides included in the second exhaust gas can be reduced by 30 to 60 percent compared to the content of nitrogen oxides included in the first exhaust gas.

The second reduction device 300 may be configured to accommodate a second exhaust gas, and to remove nitrogen oxides of the second exhaust gas.

According to exemplary embodiments, the second reduction device 300 may react a third fluid including ammonia with the second exhaust gas on a catalyst for removing nitrogen oxides. As a result, the nitrogen oxides included in the second exhaust gas may be reduced, so that the content of nitrogen oxides may be reduced.

As a non-limiting example, a third fluid may include, by area %, 0.2 to 3.0% of ammonia, based on a total volume of the third fluid. More specifically, the third fluid may include, by area %, 0.3 to 2.5% of ammonia. The third fluid may include, by area %, 0.5 to 2.0% of ammonia. An ammonia content of the third fluid can be controlled by diluting the second fluid using air or water.

The third fluid may be any one of ammonia gas, urea solution, ammonia solution, and combinations thereof. As a non-limiting example, the third fluid may be provided to the second reduction device 300 by vaporizing one or more of urea solution and ammonia solution.

The second exhaust gas has a relatively lower content of nitrogen oxides compared to the first exhaust gas. Therefore, removing nitrogen oxides by reducing the second exhaust gas under high temperature conditions may be relatively less efficient. However, the nitrogen oxide reduction system 1000 according to exemplary embodiments includes a second reduction device 300 that processes the second exhaust gas on a catalyst. Therefore, nitrogen oxides included in the second exhaust gas may be effectively reduced even at a relatively low temperature. The reduction reaction of nitrogen oxides may follow one or more of Reaction Formulas 1 to 4 described above.

The second reduction device may be configured to perform a selective catalytic reduction (SCR) reaction using the third fluid as a reducing agent.

An internal temperature of the second reduction device 300 may be 200 to 400°C. The second reduction device 300 may reduce the nitrogen oxides included in the second exhaust gas at a relatively low temperature. As a result, a load applied to the device may be reduced, and the stability of the device may be improved.

When the internal temperature of the second reduction device 300 is lower than 200°C, the reduction treatment efficiency of the second exhaust gas may be reduced. When the internal temperature of the second reduction device 300 is higher than 400°C, active metal particles contained in the catalyst of the second reduction device 300 may clump together and become deactivated. In addition, ammonia contained in the third fluid may react with oxygen first and be consumed. As a result, the reduction treatment efficiency of the second exhaust gas may be reduced.

According to exemplary embodiments, the second reduction device 300 may include an injection device 310 and a catalyst 320 for removing nitrogen oxides.

The injection device 310 may be configured to supply a third fluid to the second reduction device 300. More specifically, the injection device 310 may provide the third fluid to upstream of the second reduction device 300. As a result, uniform mixing of the third fluid and the second exhaust gas is possible, thereby improving efficiency of the reduction reaction of the second exhaust gas.

As one example, the injection device 310 may include a pipe extending into the interior of the second reduction device 300 and a nozzle configured to inject a third fluid from the pipe. As another example, the injection device 310 may be a sprinkler injecting a third fluid into the interior of the second reduction device 300.

The injection device 310 may include an opening/closing valve (not shown) configured to control a supplied amount of the third fluid. By controlling a degree of opening of the opening/closing valve, the supply of the third fluid may be cut off or the amount of the third fluid injected may be controlled.

The injection device 310 may supply the third fluid in parallel with the second exhaust gas. As a result, the contact efficiency between the second exhaust gas and the third fluid may be improved without hindering the flow of the second exhaust gas within the second reduction device 300.

The second reduction device 300 may include a sensor configured to measure an ammonia content included in the third fluid. The nitrogen oxide reduction system 1000 may accommodate the measured ammonia content data to control an injection amount of the third fluid or the ammonia content.

A catalyst for removing nitrogen oxides 320 may be disposed downstream of the second reduction device 300. This allows a reaction rate of the second exhaust gas to be improved before the second exhaust gas is discharged, thereby effectively removing nitrogen oxides included in the second exhaust gas.

The catalyst for removing nitrogen oxides 320 may include any one of iron (Fe), copper (Cu), tin (Sn), manganese (Mn), cerium (Ce), vanadium (V), tungsten (W), molybdenum (Mo), and combinations thereof.

A catalyst for removing nitrogen oxides may be in the form in which active metal particles are supported on a support containing titanium (Ti). By using the supported catalyst for removing nitrogen oxides, a surface area of the active metal particles may be increased, and the durability of the catalyst may be improved. As a result, the activity of the catalyst for removing nitrogen oxides may be improved, thereby increasing the reduction efficiency of nitrogen oxides.

As a non-limiting example, the catalyst for removing nitrogen oxides 320 may be provided inside the second reduction device 300 in the form of a plate. The catalyst for removing nitrogen oxides 320 may be provided inside the second reduction device 300 in the form of a honeycomb. The catalyst for removing nitrogen oxides 320 may be provided in a corrugated form inside the second reduction device 300. The catalyst for removing nitrogen oxides 320 may be provided in a multi-stage manner inside the second reduction device 300.

A content of nitrogen oxides included in processed gas having passed through the second reduction device 300 may be 5 to 50 ppm by volume%, based on the total volume of the processed gas.

The content of nitrogen oxides included in the processed gas having passed through the second reduction device 300 may be reduced by 70 to 95% compared to the content of nitrogen oxides included in the second exhaust gas.

The nitrogen oxide reduction system 1000 may control an amount of ammonia supplied (Q1) to the first reduction device 200 and control an amount of ammonia supplied (Q2) to the second reduction device based on a nitrogen oxide content of the first exhaust gas.

According to exemplary embodiments, the nitrogen oxide reduction system 1000 may control the nitrogen oxide content (N1) of the first exhaust gas, the amount of ammonia supplied (Q1) to the first reduction device, and the amount of ammonia supplied (Q2) to the second reduction device to satisfy the following Relational Expression 1. [Relation Expression 1] $105 0.95 \leq \left(Q1+Q2\right) / N 1 \leq 1$

When total supplied amounts of ammonia (Q1+Q2) introduced into the nitrogen oxide reduction system 1000 is less than the nitrogen oxide content (N1) of the first exhaust gas (when the amount is less than 0.95 in Relational Expression 1 above, a conversion rate of nitrogen oxides may decrease. In this case, the exhaust gas discharged from the second reduction device 300 may contain a large amount of nitrogen oxides. The conversion rate of nitrogen oxides may be increased as the supplied amount of ammonia used as a reducing agent increases. However, when a relatively higher amount of ammonia is introduced thereinto compared to the nitrogen oxide content (N1) of the first exhaust gas (when it exceeds 1 in Relational Expression 1 above), an excessive amount of ammonia slip (NH₃ slip) may be generated, which can reduce the efficiency of the nitrogen oxide reduction system 1000. In addition, it can cause corrosion of the catalyst for removing nitrogen oxides 320, thereby increasing the maintenance costs of the second reduction device 300 and shortening the lifespan.

As a non-limiting example, an amount of ammonia supplied (Q1) to the first reduction device may be controlled in any one of the following manners: controlling a supplied amount of a second fluid, controlling an ammonia content of the second fluid, and a combination thereof. The amount of ammonia supplied (Q1) to the second reduction device may be controlled in any one of the following manners: controlling a supplied amount of a third fluid, controlling an ammonia content of the third fluid, and a combination thereof.

The nitrogen oxide reduction system 1000 may control the nitrogen oxide content (N2) of the second exhaust gas and the amount of ammonia supplied (Q2) to the second reduction device 300 to satisfy the following Relational Expression 2. [Relation Expression 2] $0.95 \leq Q 2 / N 2 \leq 1$

As described above, an amount of ammonia supplied (Q2) to the second reduction device 300 may be determined by the nitrogen oxide content (N2) of the second exhaust gas. When the amount of ammonia supplied (Q2) to the second reduction device 300 is less than the nitrogen oxide content (N2) of the second exhaust gas (when it is less than 0.95 in Relational Expression 2 above), a conversion rate of nitrogen oxides of the second reduction device 300 may be reduced. Conversely, when a relatively higher amount of ammonia is introduced thereinto compared to the nitrogen oxide content (N2) of the second exhaust gas (when it exceeds 1 in Relational Expression 2 above), the efficiency of the second reduction device 300 is reduced, and an excessive amount of ammonia slip may occur.

As a non-limiting example, an amount of a third fluid supplied to the second reduction device 300 may be determined according to the ammonia content included in the second exhaust gas. Alternatively, an ammonia content of the third fluid may be determined according to the ammonia content contained in the second exhaust gas.

Unreacted ammonia (NH₃) may remain in the second exhaust gas supplied to downstream of the first reduction device 200. Such an unreacted ammonia may be supplied to the second reduction device 300. Accordingly, the supply amount of the third gas may be controlled so that the amount of ammonia supplied (Q2) to the second reduction device 300 satisfies Relational Expression 2 described above. As an example, when unreacted ammonia remains in the second exhaust gas, the supplied amount of the third gas may be reduced.

From the above-descriptions, the nitrogen oxide reduction system 1000 may effectively reduce nitrogen oxides in the exhaust gas generated by ammonia combustion by linking the first reduction device 200 with the second reduction device 300. In addition, the conversion rate of nitrogen oxides may be improved by controlling the supplied amounts of the second fluid and the third fluid so that the amounts of ammonia supplied to the first reduction device 200 and the second reduction device 300 satisfy Relational Expression 1 and Relational Expression 2 described above.

### (Example 2)

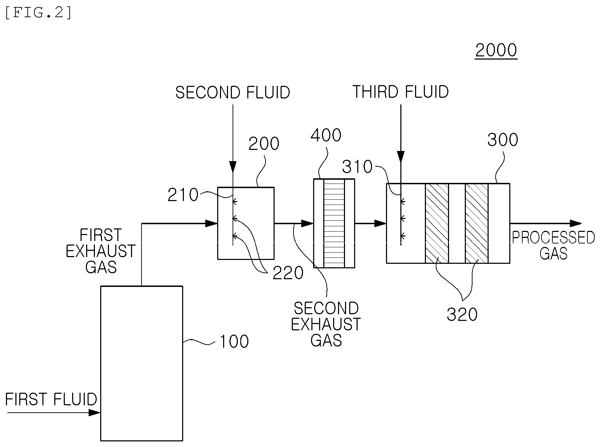

FIG. 2 is a process diagram for illustrating a nitrogen oxide reduction system 2000 according to other exemplary embodiments.

Referring to FIG. 2, the nitrogen oxide reduction system 2000 may further include a catalyst for decomposing nitrous oxides N2O, catalyzing a reduction reaction of nitrous oxides. According to exemplary embodiments, the nitrogen oxide reduction system 2000 may further include a third reduction device 400 accommodating the catalyst for decomposing nitrous oxides.

Nitrous oxide is a more stable substance than other nitrogen oxides (NOx). As a result, removing nitrous oxides requires relatively more thermal energy compared to other nitrogen oxides (NOx). In order to efficiently supply heat required for the reduction reaction of nitrous oxides, a catalyst for decomposing nitrous oxides is disposed downstream of the first reduction device 200 to catalyze the reduction reaction of nitrous oxide contained in a second exhaust gas.

A reaction temperature in the first reduction device 200 is a high temperature of 900°C or higher. As a result, a second exhaust gas, which is a processed gas of the first reduction device 200, may also have high sensible heat. Accordingly, a catalyst for decomposing nitrous oxides may utilize the sensible heat of the second exhaust gas by being disposed adjacent to the first reduction device 200. As a result, since there is no need to separately heat the second exhaust gas for the reduction reaction of nitrous oxides, the efficiency of the nitrogen oxide reduction system may be improved.

The catalyst for decomposing nitrous oxide may include one or more of precious metals, transition metals, and alloys thereof. As a non-limiting example, the precious metal may include one or more of ruthenium (Ru), platinum (Pt), rhodium (Rh), and alloys thereof. The transition metal may include one or more of iron (Fe), cobalt (Co), copper (Cu), and alloys thereof.

The catalyst for decomposing nitrous oxides may be provided in a form supported on a support including a zeolite. As a non-limiting example, the zeolite may include one or more structures of FER, MFI, BEA, and FAU. More specifically, the zeolite may be a zeolite with a BEA structure. FER and MFI are zeolites with a mesoporous structure. BEA and FAU are zeolites with a large pore structure. A pore size of a zeolite may be expressed based on the number of TO4 tetrahedra that form the smallest 'ring' that restricts molecular diffusion within the pore.

As a non-limiting example, a catalyst for decomposing nitrous oxides can be provided in the form of a plate. A catalyst for decomposing nitrous oxides 330 may be provided in the form of a honeycomb. The catalyst for decomposing nitrous oxide 330 may be provided in a corrugated form.

According to exemplary embodiments, a third reduction device 400 may be configured to process the nitrous oxides included in the second exhaust gas on a catalyst for decomposing nitrous oxides.

The third reduction device 400 may be disposed between the first reduction device 200 and the second reduction device 300, based on the flow of the second exhaust gas. As a result, the second exhaust gas accommodated in the third reduction device 400 may pass through a catalyst for decomposing nitrous oxides and be discharged to the outside of the third reduction device 400. Accordingly, the third reduction device 400 may accommodate the second exhaust gas and reduce nitrous oxides included in the second exhaust gas. In addition, the third reduction device 400 may provide the second exhaust gas having a reduced content of nitrous oxides to the second reduction device 300.

An internal temperature of the third reduction device 400 may be 350 to 600°C. In order to reduce stable nitrous oxide, the internal temperature of the third reduction device 400 should be 350°C or higher. However, when the internal temperature of the third reduction device 400 exceeds 600°C, an overload may occur in the third reduction device 400, resulting in reduced stability and deactivation of a catalyst for decomposing nitrous oxides.

According to exemplary embodiments, a separate reducing agent may not be supplied to the third reduction device 400, except for the second exhaust gas. The reduction treatment of nitrous oxides may be performed through a reaction using a reducing agent (see Reaction Formula 3 above) and a direct decomposition reaction (see Reaction Formula 4 above). The third reduction device 400 may reduce nitrous oxide by using unreacted ammonia contained in the second exhaust gas as a reducing agent. Even when the second exhaust gas does not contain unreacted ammonia, the third reduction device 400 may reduce nitrous oxide through a direct decomposition reaction of nitrous oxide. However, this is merely one of the exemplary embodiments of the present disclosure, and a person skilled in the art may supply a reducing agent containing ammonia to the third reduction device 400 as needed.

In addition, since the configurations overlapping the nitrogen oxide reduction system described in Example 1 above can be applied in the same manner to the nitrogen oxide system according to this embodiment, a detailed description thereof is omitted.

### (Example 3)

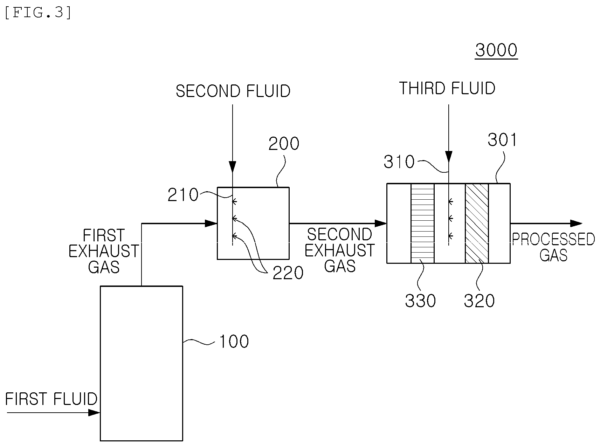

FIG. 3 is a process diagram for illustrating a nitrogen oxide reduction system 3000 according to other exemplary embodiments.

Referring to FIG. 3, a catalyst for decomposing nitrous oxides 330 may be accommodated inside a second reduction device 301.

The catalyst for decomposing nitrous oxides 330 may be disposed upstream of the second reduction device 301. The catalyst for removing nitrous oxides 320 may be disposed downstream of the second reduction device 301. A third fluid may be supplied between the catalyst for decomposing nitrous oxides 330 and the catalyst for removing nitrogen oxides 320.

The second reduction device 301 may have a temperature distribution of 350 to 500°C at the front end thereof, at which the catalyst for decomposing nitrous oxides 330 is disposed, and a temperature distribution of 200 to 400°C at the rear end thereof, at which the catalyst for removing nitrous oxides 320 is disposed.

As described above, by including the catalyst for decomposing nitrous oxides 330 in the second reduction device 301, the nitrogen oxide treatment efficiency of the second reduction device 301 may be further improved. Furthermore, the efficiency of the nitrogen oxide reduction system 3000 may be further improved. In addition, since nitrous oxides may be removed along with nitrogen oxides in a single reactor, it has the effect of enabling an efficient process configuration by minimizing the total process area.

In addition, since the configuration overlapping the nitrogen oxide reduction systems described in Examples 1 and 2 above may be equally applied to the nitrogen oxide system according to this embodiment, a detailed description thereof is omitted.

### Mode for Invention

### Experimental Example 1: Confirmation of Supplied Amounts of Ammonia Control Effect

A conversion rate of nitrogen oxides according to a supplied amount of ammonia was analyzed by simulating a second reduction device. Since it was confirmed that most of nitrogen oxides generated during ammonia combustion are NO, the experiment was conducted targeting NO.

1,500 ppm of NO was supplied to a reactor simulating the second reduction device. Air including a predetermined ammonia concentration was supplied as a reducing agent. In this case, a space velocity (GHSV) of the reactor was controlled to 6,300 h⁻¹.

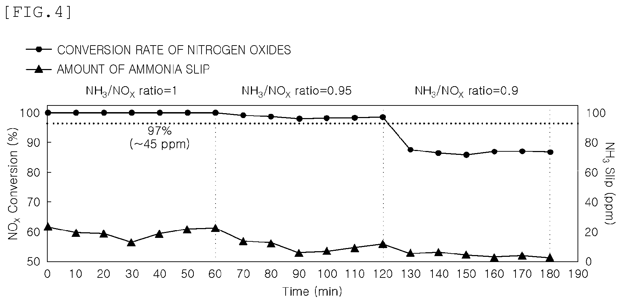

FIG. 4 is a graph illustrating a conversion rate of nitrogen oxides and an amount of ammonia slip according to a supplied amount of ammonia.

Referring to FIG. 4, it was confirmed that the conversion rate of NO increases as a ratio of ammonia/NO increases. In addition, it was confirmed that the conversion rate of NO drops sharply in a range in which the ratio of ammonia/NO is less than 0.95. It was confirmed that as the ratio of ammonia/NO increased, an amount of unreacted ammonia also increased. However, when the ratio of ammonia/NO was 1 or less, the amount of unreacted ammonia generated was about 1.5% of the introduced ammonia, and it was confirmed that the amount of ammonia slip generated was not large.

From the above descriptions, it was confirmed that when the ratio of ammonia/NO was controlled to be 0.95 to 1, the conversion rate of nitrogen oxides could be maximized and ammonia slip could be minimized.

While the present invention has been described in detail through exemplary embodiment, other types of exemplary embodiments are also possible. The configurations described in the drawings or embodiments described in this specification are merely one embodiment of the present invention and do not represent all technical concepts of the present invention; therefore, it should be understood that various equivalents and modifications that can replace them may exist at the time of filing this application.

### (Description Of Numerals)

1000, 2000, 3000: Nitrogen Oxide Reduction System
100: Combustion Facility
200: First Reduction System
300: Second Reduction System
310: Injection Device
320: Catalyst For Removing Nitrogen Oxides
330: Catalyst For Decomposing Nitrous Oxides

## Claims

1. A nitrogen oxide reduction system, comprising:
a combustion facility configured to combust a first fluid including ammonia, and to discharge a first exhaust gas including nitrogen oxides;
a first reduction device configured to inject a second fluid including ammonia into the first exhaust gas, and to provide a second exhaust gas having a lower nitrogen oxide content than that of the first exhaust gas; and
a second reduction device configured to accommodate the second exhaust gas, and to remove nitrogen oxides of the second exhaust gas by reacting a third fluid including ammonia with the second exhaust gas on a catalyst for removing nitrogen oxides,
wherein a nitrogen oxide content (N1) of the first exhaust gas, an amount of ammonia supplied (Q1) to the first reduction device, and an amount of ammonia supplied (Q2) to the second reduction device satisfy the following Relational Expression 1, [Relation Expression 1] $0.95 \leq \left(Q1+Q2\right) / N 1 \leq 1$

2. The nitrogen oxide reduction system of claim 1, wherein a nitrogen oxide content (N2) of the second exhaust gas and the amount of ammonia supplied (Q2) to the second reduction device satisfy the following Relational Expression 2, [Relation Expression 2] $0.95 \leq Q 2 / N 2 \leq 1$

3. The nitrogen oxide reduction system of claim 1, wherein the first reduction device is configured to perform a selective non-catalytic reduction (SNCR) reaction using the second fluid as a reducing agent.

4. The nitrogen oxide reduction system of claim 1, wherein a temperature of the first exhaust gas in contact with the injected second fluid is 900 to 1,000°C.

5. The nitrogen oxide reduction system of claim 1, wherein the first reduction device comprises a pipe extending into the interior of the combustion facility, and a nozzle configured to inject the second fluid from the pipe.

6. The nitrogen oxide reduction system of claim 1, wherein the second reduction device is configured to perform a selective catalytic reduction (SCR) reaction using the third fluid as a reducing agent.

7. The nitrogen oxide reduction system of claim 1, wherein the second reduction device is configured so that, based on the flow of the second exhaust gas, the third fluid is supplied upstream of the second reduction device, and the catalyst for removing nitrogen oxides is located downstream of the second reduction device.

8. The nitrogen oxide reduction system of claim 1, wherein the nitrogen oxide reduction system further comprises a catalyst for decomposing nitrous oxides disposed downstream of the first reduction device, and catalyzing a reduction reaction of nitrous oxides included in the second exhaust gas.

9. The nitrogen oxide reduction system of claim 8, wherein the catalyst for decomposing nitrous oxides is accommodated inside the second reduction device, and
the third fluid is supplied into the interior of the second reduction device between the catalyst for decomposing nitrous oxides and the catalyst for removing nitrogen oxides.

10. The nitrogen oxide reduction system of claim 8, further comprising:
a third reduction device, based on the flow of the second exhaust gas, disposed between the first reduction device and the second reduction device, and
configured to accommodate the second exhaust gas, and to process the nitrogen oxides included in the second exhaust gas on a catalyst for decomposing nitrous oxides.

11. The nitrogen oxide reduction system of claim 10, wherein an internal temperature of the third reduction device is 350 to 600°C.

12. The nitrogen oxide reduction system of claim 8, wherein the catalyst for decomposing nitrous oxides comprises one or more of precious metals, transition metals, and alloys thereof.

13. The nitrogen oxide reduction system of claim 8, wherein the catalyst for decomposing nitrous oxides is in the form of being supported on a support including zeolite.

14. The nitrogen oxide reduction system of claim 1, wherein an internal temperature of the second reduction device is 200 to 400°C.

15. The nitrogen oxide reduction system of claim 1, wherein the catalyst for removing nitrogen oxides comprises one or more of vanadium (V), tungsten (W), molybdenum (Mo), and combinations thereof.

16. The nitrogen oxide reduction system of claim 1, wherein the catalyst for removing nitrogen oxides is in the form in which active metal particles are supported on a support including titanium (Ti).
